# FASCICULE DE BREVET EUROPEEN

(11) **EP 0 507 710 B1**
(45) Date de publication et mention de la délivrance du brevet: **20.09.1995**
(21) Numéro de dépôt: 92440036.9
(22) Date de dépôt: 24.03.1992
(51) Int. Cl.: A01B 63/24, A01B 35/26

(54) **Machine agricole de travail du sol avec montage perfectionné du bras de soc**
Landwirtschaftliche Bodenbearbeitungsmaschine mit verbesserter Befestigung des Tragarmes der Schar
Agricultural soil working machine with improved mounting of the support arm of the share

(30) Priorité: 03.04.1991 FR 9104221
(43) Date de publication de la demande: 07.10.1992
(73) Titulaire: KUHN S.A., F-67700 Saverne (FR)
(72) Inventeur: Seemann, Michel, F-57370 Phalsbourg (FR); Granier, Frédéric, F-67450 Mundolsheim (FR)

(56) Documents cités:
- EP-A- 0 093 193
- EP-A- 0 172 261
- DE-C- 463 198
- DE-C- 536 316
- DE-C- 931 323
- GB-A- 572 487
- US-A- 3 325 227
- US-A- 4 374 546
- Prospectum DUTZI, Schlüterberg 1986
- Prospectum KUHN "Rotorgrubber RG 3000" ref. 9203093-10/87

## Description

Machine agricole de travail du sol comportant un châssis, au moins un soc et un bras de soc correspondant lié audit châssis à l'aide d'éléments de liaison, lesdits éléments de liaison comportant :
- des organes de guidage autorisant un déplacement en hauteur dudit bras de soc par rapport au châssis,
- au moins un organe de maintien maintenant le bras de soc par rapport au châssis dans la position choisie
et
- une chape dont les ailes s'étendent au moins sensiblement parallèlement à un plan vertical dirigé suivant la direction de travail et entre lesquelles le bras de soc est maintenu au moyen de l'organe de maintien,
un premier organe de guidage s'étendant derrière le bras de soc, compte tenu du sens d'avance au travail, lequel premier organe de guidage présente une surface de positionnement destinée à collaborer avec une surface de positionnement complémentaire prévue sur le bras de soc et est lié au châssis à l'aide d'une articulation cylindrique d'axe au moins sensiblement perpendiculaire à la direction de travail, tandis qu'un deuxième organe de guidage s'étend devant le bras de soc, compte tenu du sens d'avance au travail et plus haut que ledit premier organe de guidage, lequel deuxième organe de guidage présente une surface de positionnement en forme de "V" ou équivalente destinée à collaborer avec une surface de positionnement complémentaire prévue sur le bras de soc et est lié au châssis à l'aide d'une articulation cylindrique d'axe au moins sensiblement perpendiculaire à la direction de travail.

Une telle machine agricole de travail du sol est connue par le brevet d'invention allemand DE-C-536 316. Cette machine agricole connue comporte un châssis, un soc et un bras de soc correspondant lié audit châssis à l'aide d'éléments de liaison comportant des organes de guidage, un organe de maintien et une chape dans laquelle s'étend le bras de soc. Lesdits organes de guidage comportent des galets cylindriques rotatifs en contact avec la face arrière du bras de soc, des galets rotatifs avec une gorge en "V" en contact avec la face avant biseautée du bras de soc et des plots fixes en regard des deux faces latérales du bras de soc. Les galets rotatifs sont destinés à faciliter la translation verticale du bras de soc dans la chape lors du réglage en hauteur dudit bras de soc par rapport au châssis et à absorber l'effort s'exerçant sur le bras de soc durant le travail. Le maintien du bras de soc transversalement à la direction d'avance au travail doit être réalisé par les plots latéraux.

Cette machine de travail du sol comporte également un organe de maintien constitué par un écrou solidaire du bras de soc et une vis liée au châssis et vissée dans ledit écrou, ce dispositif maintenant ledit bras de soc par rapport au châssis dans la position choisie. La translation verticale du bras de soc dans la chape se fait par l'intermédiaire de la vis qui peut être mise en rotation grâce à un mécanisme à pignons coniques animé par un volant manuel.

Etant donné que le bras de soc doit pouvoir être facilement translaté dans la chape, il doit nécessairement subsister un jeu suffisant entre les deux faces latérales du bras de soc et les plots fixés dans la chape. Mais ce jeu occasionnera un mauvais maintien latéral du bras de soc durant le travail.

Durant le travail, le bras de soc a bien tendance à s'appuyer et basculer sur le galet arrière inférieur ce qui favorise le contact du bras de soc avec le galet avant supérieur. Mais ce dernier ne peut pas empêcher le flottement latéral du bras de soc dans la chape. Ce flottement latéral peut d'ailleurs engendrer des vibrations qui peuvent faire tourner la vis de réglage du bras de soc et modifier ainsi de manière inopinée la profondeur de travail du soc. Pour éviter cela, l'utilisateur doit constamment agir sur le volant manuel pour immobiliser le bras de soc ce qui est particulièrement fatigant et inconfortable.

Il est également connu dans l'état de la technique (brevet US-A-4,374,546) une machine agricole de travail du sol qui comporte un châssis muni de poutrelles en I, et une multitude de dents liées rigidement aux poutrelles dudit châssis à l'aide d'éléments de liaison. A cet effet, des trous espacés de forme carrée sont pratiqués dans les ailes frontales inférieure et supérieure de chaque poutrelle. Chaque dent qui a une section carrée, est introduite dans deux trous correspondants de la poutrelle respective, avec une arête dirigée vers l'avant. Chaque dent est bloquée au moyen d'un dispositif de blocage comportant une partie cylindrique munie d'un trou circulaire qui est traversé par ladite dent, et une partie filetée traversant l'âme verticale de la poutrelle, et sur laquelle est vissé un écrou. Après serrage de cet écrou la dent est plaquée contre la partie arrière des trous carrés respectifs.

Il est encore connu dans l'état de la technique une machine agricole de travail du sol dont le châssis supporte un rotor, l'axe duquel s'étendant orthogonalement à la direction de travail (prospectus DUTZI, Schlütertag 1986). Ce rotor comporte un arbre central sur lequel sont implantés des flasques équipés de bêches. Derrière le rotor, le châssis est muni d'un rouleau de type "Packer" destiné à rouler sur le sol. A l'avant du rotor et parallèlement à son axe est prévue une rangée de socs. Chaque soc s'étend plus bas que le rotor et est muni d'un bras de soc correspondant guidé dans un fourreau respectif du châssis. Ce fourreau est de section rectangulaire et s'étend vers le haut, de sorte à autoriser un déplacement en hauteur du bras de soc par rapport au châssis lors du réglage.

Lorsque la profondeur de travail du soc a été réglée par l'utilisateur, celui-ci doit verrouiller le bras de soc au moyen d'une broche. Dans ce but, le bras de soc comporte plusieurs trous circulaires dont les axes sont dirigés horizontalement et orthogonalement à la direction de travail. Ces trous sont par ailleurs tous identiques et alignés de manière équidistante suivant l'axe longitudinal du bras de soc. De part et d'autre du bras de soc, chaque côté latéral du fourreau est pourvu d'un trou respectif. Ces deux trous sont circulaires et leur diamètre est identique au diamètre des trous du bras de soc. Du reste, ces deux trous sont coaxiaux et agencés de telle sorte qu'en translatant le bras de soc dans le fourreau, chaque trou du bras de soc coïncide à un moment donné avec les deux trous du fourreau. Ainsi, l'utilisateur peut enfiler la broche dans les trous correspondants, ce qui a pour effet de verrouiller le bras de soc.

En conséquence, pour changer la position du bras de soc par rapport au fourreau, il suffit simplement à l'utilisateur de retirer la broche, de régler la nouvelle profondeur de travail du soc et de remettre ladite broche en place.

Afin de pouvoir translater le bras de soc dans le fourreau lors du réglage de la profondeur de travail, il doit nécessairement exister un certain jeu entre le bras de soc et le fourreau. Ce jeu présente par contre un inconvénient durant le travail, étant donné que le bras de soc risque de flotter latéralement.

Il est également connu une autre machine, proche de la précédente (prospectus KUHN "Rotorgrubber RG 3000" réf. 920 30 93 - 10/87), sur laquelle les bras de soc s'étendent, selon un principe très intéressant, dans le volume généré par les bêches du rotor. Un tel agencement limite l'accumulation de la terre à l'avant de chaque bras de soc, mais requiert cependant un positionnement latéral relativement précis dudit bras de soc par rapport au châssis. Ainsi, pour supprimer le jeu nécessaire au réglage de la profondeur de travail, le bras de soc est immobilisé au moyen d'une vis de pression. Celle-ci s'étend orthogonalement à la direction de travail et est vissée à travers l'un des côtés latéraux du fourreau pour plaquer le bras de soc contre l'autre côté latéral du fourreau. Un contre-écrou maintient la vis de pression dans sa position serrée. Derrière le bras de soc est aussi prévue une cale fixée au châssis à l'aide d'une autre vis et destinée à compléter le verrouillage du bras de soc suivant la direction de travail. Sur cette machine connue, chaque bras de soc est relativement bien maintenu en position lors du travail. Toutefois, pour régler chaque soc en hauteur, il faut desserrer le contre-écrou et la vis de pression, desserrer la vis de la cale, ajuster la hauteur, resserrer la vis de pression et le contre-écrou, et resserrer la vis de la cale. Toutes ces manipulations sont peu aisées et demandent beaucoup de temps.

Ainsi, la présente invention a pour but de créer une machine agricole de travail du sol sur laquelle la profondeur de travail de chaque soc peut être réglée rapidement, tout en supprimant, lors du travail le jeu du bras de soc par rapport au châssis nécessaire pour le réglage.

A cet effet, la machine agricole de travail du sol selon l'invention est caractérisée en ce que la surface de positionnement du premier organe de guidage est également en forme de "V" ou équivalente de sorte qu'au travail lesdits organes de guidage positionnent ledit bras de soc transversalement à la direction de travail, que l'organe de maintien est une broche et que le bras de soc comporte une pluralité de trous d'axe dirigé transversalement à la direction de travail, lesquels trous pouvant être amenés en face d'une paire de trous coaxiaux de la chape dans le but de recevoir ladite broche.

Grâce à cette caractéristique, le jeu nécessaire au réglage de la profondeur de travail est entièrement supprimé lors du travail.

Du fait que le positionnement du bras de soc par rapport au châssis ne nécessite aucune vis de pression, la modification de la profondeur de travail peut également se faire rapidement.

Afin de permettre aux organes de guidage d'être correctement orientés par rapport au bras de soc, lesdits organes de guidage sont liés chacun au châssis à l'aide d'une articulation cylindrique respective d'axe au moins sensiblement perpendiculaire à la direction de travail.

Dans l'invention, il pourra en sus être prévu que les surfaces de positionnement présentent une forme en "V", dont le plan de symétrie respectif s'étend au moins sensiblement parallèlement à un plan vertical dirigé suivant la direction de travail.

Préférentiellement, il sera alors prévu que le plan de symétrie de la surface de positionnement du deuxième organe de positionnement du deuxième organe de guidage soit au moins sensiblement confondu avec le plan de symétrie de la surface de positionnement du premier organe de guidage.

Dans l'invention, il pourra aussi être prévu que l'angle d'ouverture de la forme en "V" desdites surfaces de positionnement soit de l'ordre de 90°.

Dans l'invention, il pourra par ailleurs être prévu que la surface de positionnement concave soit aménagée sur l'organe de guidage.

Dans l'invention il pourra encore être prévu que les éléments de liaison comportent en sus au moins une butée contribuant à maintenir le bras de soc en position lors du transport et/ou à guider le bras de soc lorsque celui-ci est déplacé en hauteur.

Avantageusement, une première butée sera implantée juste devant le bras de soc et de préférence au moins sensiblement au niveau du premier organe de guidage, et une deuxième butée sera implantée juste derrière le bras de soc et de préférence au moins sensiblement au niveau du deuxième organe de guidage.

Pour déplacer le bras de soc en hauteur, il pourra être prévu que les éléments de liaison qui lient le bras de soc au châssis, comportent en sus un dispositif à vis et écrou.

Avantageusement, l'axe de la vis du dispositif à vis et écrou s'étendra au moins sensiblement parallèlement à l'axe longitudinal de l'extrémité supérieure du bras de soc, de sorte que ladite vis puisse être vissée plus ou moins profondément dans un écrou solidaire du bras de soc et s'appuyer à son extrémité libre sur le châssis.

Dans l'invention il pourra également être prévu que le châssis supporte en sus un rotor muni d'outils de travail du sol.

Avantageusement, le bras de soc s'étendra dans le cylindre généré par les outils de travail du sol, lors de la rotation du rotor.

D'autres caractéristiques de l'invention apparaissent dans la description suivante d'un exemple non limitatif de réalisation, faite en référence au dessin annexé sur lequel :
- la figure 1 représente une vue latérale d'une machine agricole de travail du sol selon l'invention ;
- la figure 2 représente une vue, suivant la flèche II de la figure 1, d'un soc et d'une partie du rotor ;
- la figure 3 représente une coupe de ladite machine agricole de travail du sol suivant le plan III-III de la figure 2 ; et
- la figure 4 représente une coupe brisée (suivant IV-IV de la figure 3), à une échelle agrandie, d'une partie du bras de soc liée au châssis.

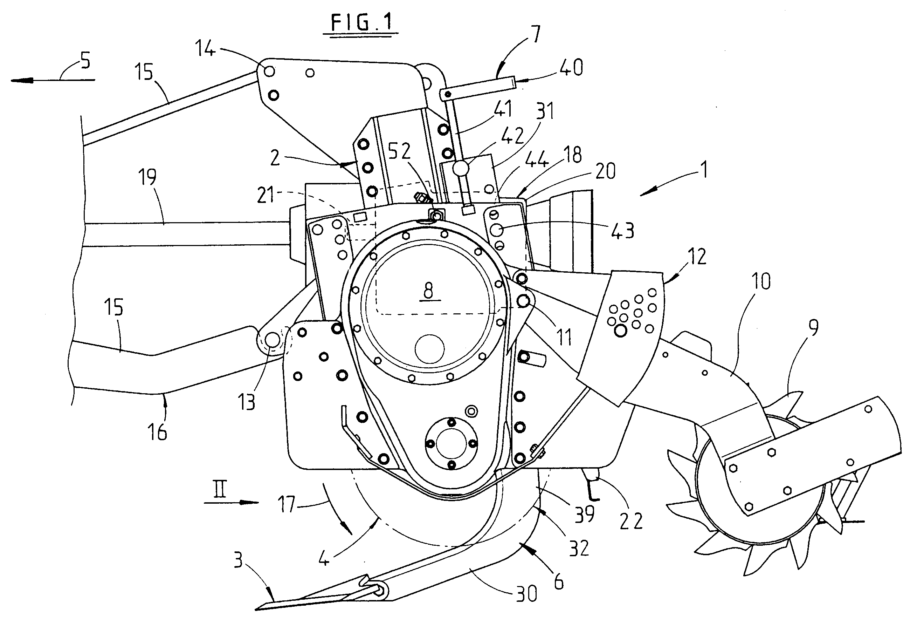

La machine agricole de travail du sol (1) selon l'invention telle qu'eue est représentée sur les figures 1 à 4, comporte un châssis (2) qui supporte une rangée de socs (3) et un rotor (4). La rangée de socs (3) et l'axe longitudinal du rotor (4) s'étendent transversalement à la direction de travail (5). Le bras de soc (6) de chaque soc (3) est lié au châssis (2) au moyen d'éléments de liaison (7), tandis que le rotor (4) est, d'une manière connue de l'homme de l'art, guidé en rotation dans deux parois latérales dont est muni le châssis (2). L'une de ces parois latérales est réalisée sous forme de carter latéral (8) (figure 1).

Le châssis (2) supporte également un rouleau (9) agencé derrière le rotor (4), compte tenu du sens d'avance (5) au travail, et dont l'axe longitudinal s'étend parallèlement à l'axe longitudinal du rotor (4). Ce rouleau (9), du type "Packer" dans l'exemple représenté est guidé en rotation dans les extrémités arrière de deux bras (10), liés à leur extrémité avant au châssis (2) au moyen d'une articulation (11) d'axe parallèle à l'axe longitudinal du rouleau (9) ou du rotor (4). Entre chacun de ces bras (10) et le châssis (2) est, par ailleurs, prévu un dispositif de réglage (12) de la profondeur de travail. Grâce à ces deux dispositifs de réglage (12), il est possible de régler la hauteur du rouleau (9) par rapport au châssis (2). Au travail, le rouleau (9) roule sur le sol. De cette sorte, il détermine la profondeur de travail des socs (3) et du rotor (4) tout en participant activement au travail du sol.

Le châssis (2) comporte en outre deux points d'attelage inférieurs (13) et un point d'attelage supérieur (14) prévus pour l'accouplement de la machine agricole de travail du sol (1) à l'attelage trois points (15) d'un tracteur agricole (16), dont on n'a représenté sur la figure 1 qu'une partie des bielles de l'attelage.

Le rotor (4), supporté par le châssis (2), tourne autour de son axe longitudinal dans le sens positif (17), c'est-à-dire qu'à l'avant, le rotor (4) tourne vers le bas. Cet entraînement en rotation est réalisé par des moyens d'entraînement (18) recevant eux-mêmes le mouvement de l'arbre de prise de force (non représenté) du tracteur agricole (16) au moyen d'un arbre de transmission à joints universels (19) représenté sur la figure 1. Les moyens d'entraînement (18) sont connus de l'homme de l'art et comportent notamment un carter central (20). Le carter central (20) est un carter de renvoi qui pourra avantageusement être constitué sous forme de boite de vitesses. Il comporte, d'une part, un arbre d'entrée (21) lié à l'arbre de transmission (19) et d'autre part, un arbre de sortie (non représenté) qui transmet le mouvement au carter latéral (8) transmettant lui-même le mouvement au rotor (4).

Au-dessus du rotor (4) s'étend un capot également supporté par le châssis (2) et dont seul le volet arrière (22) apparaît sur la figure 1. Ce volet arrière (22) est, d'une manière connue de l'homme de l'art, réglable angulairement de sorte à influencer la trajectoire de la terre projetée vers l'arrière par le rotor (4).

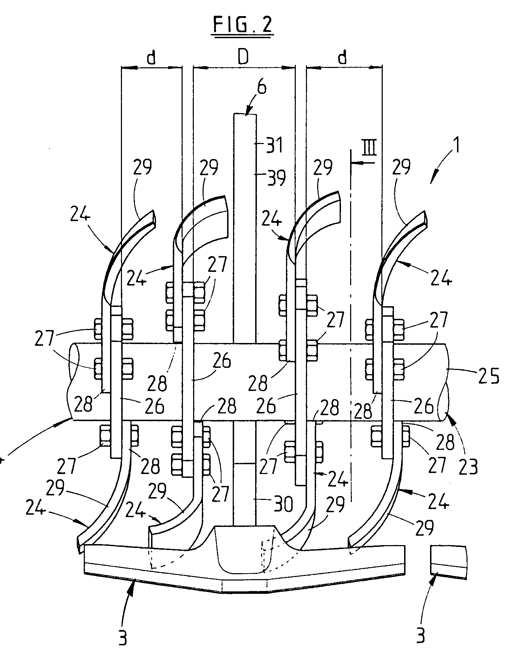

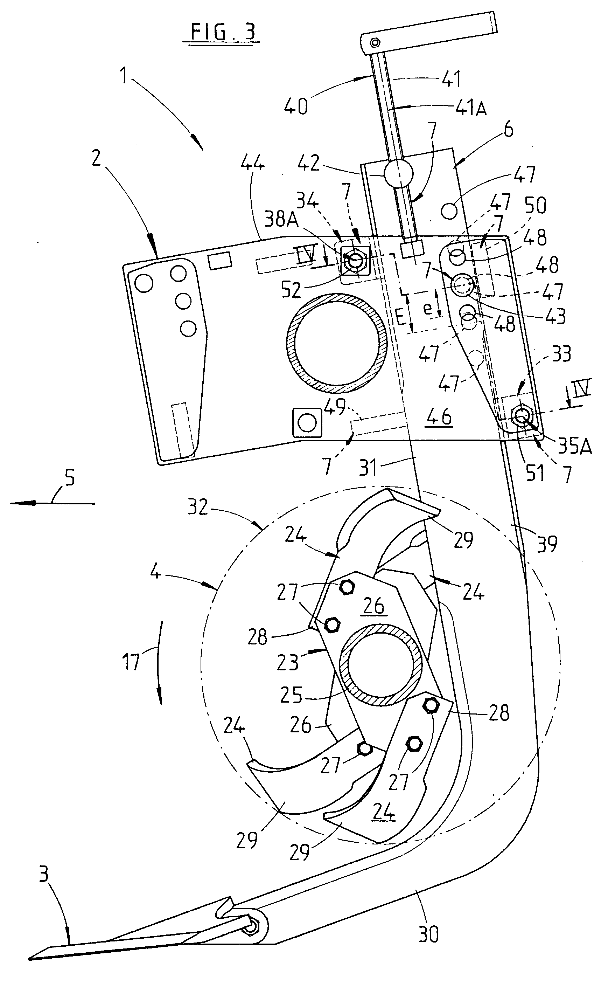

Le rotor (4) comporte un support central (23) qui supporte des outils de travail du sol (24) montés de manière démontable sur ledit support central (23) (figures 2 et 3). A cet effet, le support central (23) est constitué par une âme centrale (25) sur laquelle sont agencés des flasques (26). Comme visible sur la figure 2, la distance (D) séparant les deux flasques (26) s'étendant de part et d'autre d'un bras de soc (6) est plus grande que la distance (d) séparant deux autres flasques (26). Sur la figure 3, on voit par ailleurs que deux flasques (26) adjacents sont, en vue suivant l'axe longitudinal du rotor (4), décalés angulairement l'un par rapport à l'autre. De cette sorte, l'ensemble des outils de travail du sol (24) correspondants montés sur les différents flasques (26) sont agencés suivant une hélice qui s'enroule autour de l'axe longitudinal du rotor (4). Sur la figure 3, on voit aussi que chaque flasque (26) possède une forme allongée à chaque extrémité de laquelle est vissé un outil de travail du sol (24) au moyen de deux boulons (27). Dans l'exemple décrit, chaque flasque (26) est ainsi équipé de deux outils de travail du sol (24) qui s'étendent diamétralement opposés l'un par rapport à l'autre par rapport à l'axe longitudinal du rotor (4).

Chaque outil de travail du sol (24) est, dans l'exemple décrit, constitué par une bêche ayant une partie de fixation (28) par l'intermédiaire de laquelle elle est liée au flasque (26) correspondant et une partie active (29) courbée. Sur la figure 2, on voit que les deux bêches (24) d'un même flasque (26) sont montées sur ledit flasque (26), de telle sorte que la partie active (29) de l'une d'elle soit dirigée vers l'une des extrémités du rotor (4), et que la partie active (29) de l'autre soit dirigée vers l'autre extrémité du rotor (4).

Sur les figures 2 et 3 apparaît aussi le bras de soc (6). Ce bras de soc (6) comporte une partie avant (30) à l'extrémité avant de laquelle est lié, de manière amovible, le soc (3) et qui s'étend à partir du soc (3) vers l'arrière et légèrement vers le haut et une partie arrière (31) s'étendant à partir de l'extrémité arrière de la partie avant (30) vers le haut en direction du châssis (2). A sa partie supérieure, la partie arrière (31) du bras de soc (6) est liée au châssis (2), à l'aide des éléments de liaison (7) qui seront décrits plus en détail ultérieurement. Cette liaison du bras de soc (6) au châssis (2) est réalisée de telle manière que la position en hauteur du soc (3) par rapport au châssis (2), donc par rapport au rotor (4) puisse être réglée. Ce réglage de la position en hauteur du soc (3) par rapport au châssis (2) s'opère en déplaçant, suivant son axe longitudinal, la partie arrière (31) du bras de soc (6) par rapport au châssis (2), puis en supprimant cette translation lorsque le soc (3) occupe la position choisie.

Sur les figures 1 à 4, on voit également que chaque soc (3) s'étend pour l'essentiel devant le rotor (4), de telle sorte que la couche de terre soulevée par le soc (3) soit travaillée par le rotor (4) avant d'être redéposée sur le sol. On voit également que la partie avant (30) du bras de soc (6) s'étend sous l'âme centrale (25) du support central (23) du rotor (4) et que la partie arrière (31) du bras de soc (6) s'étend, compte tenu du sens de travail (5), derrière ladite âme centrale (25). En sus, la partie avant (30) et la partie arrière (31) du bras de soc (6) passent à l'intérieur du cylindre (32) généré par les bêches (24), lors de la rotation du rotor (4). Comme dit précédemment, la distance (D) entre les deux flasques (26) s'étendant de part et d'autre du bras de soc (6) est plus importante que la distance (d) entre deux autres flasques (26). Cette distance (D) séparant les deux flasques (26) s'étendant de part et d'autre d'un bras de soc (6) est telle que l'extrémité extérieure de la partie active (29) de la bêche (26) qu'ils supportent et dont la partie active (29) est dirigée vers le bras de soc (6), passe relativement près dudit bras de soc (6) lors de la rotation du rotor (4). Un tel agencement limite l'accumulation de terre à l'avant du bras de soc (6), mais requiert cependant un positionnement latéral relativement précis, du bras de soc (6) par rapport au rotor (4) durant le travail.

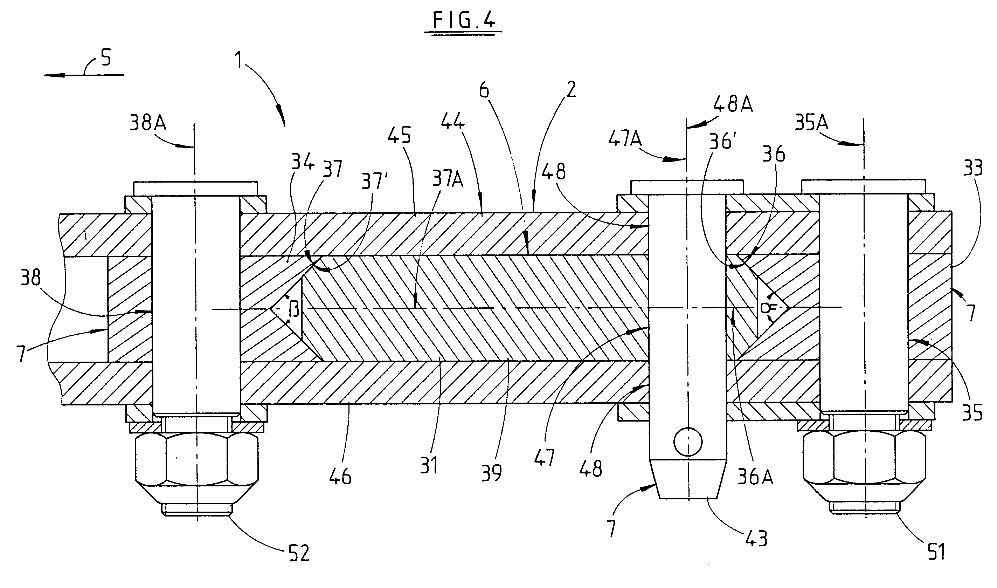

A cet effet, les éléments de liaison (7) comportent deux organes de guidage (33, 34) (figures 3 et 4). Le premier organe de guidage (33) est agencé derrière le bras de soc (6), compte tenu du sens d'avance (5) au travail et comporte une surface de positionnement (36) destinée à s'appuyer, lors du travail, contre une surface de positionnement complémentaire (36') prévue sur le bras de soc (6). Ces deux surfaces de positionnement (36, 36') présentent, dans cet exemple de réalisation selon l'invention, une forme en "V" dont le plan de symétrie (36A) s'étend au moins sensiblement parallèlement à un plan vertical dirigé suivant la direction de travail (5). Avantageusement, son angle (α) est d'environ 90° et sa concavité est dirigée vers l'avant. En sus, ce premier organe de guidage (33) est lié au châssis (2) au moyen d'une articulation cylindrique (35) d'axe géométrique (35A) s'étendant au moins sensiblement horizontalement et transversalement à la direction de travail (5).

Le deuxième organe de guidage (34), quant à lui, est agencé devant le bras de soc (6), compte tenu du sens d'avance (5) au travail, au-dessus du premier organe de guidage (33) et de sorte à être en contact avec le bras de soc (6) au moyen de deux surfaces de positionnement supplémentaires (37, 37'), dont l'une (37) est prévue sur le deuxième organe de guidage (34) et l'autre (37') sur le bras de soc (6). Comme il apparaît sur la figure 4, les deux surfaces de positionnement supplémentaires (37, 37') présentent également une forme en "V". Son plan de symétrie (37A) est par ailleurs au moins sensiblement confondu avec le plan de symétrie (36A) des deux autres surfaces de positionnement (36, 36'). En outre, l'angle (β) de ladite forme en "V" est d'environ 90° et sa concavité est dirigée vers l'arrière. Pour que les surfaces de positionnement supplémentaires (37, 37') s'adaptent au mieux l'une à l'autre, le deuxième organe de guidage (34) est lié au châssis (2) au moyen d'une articulation (38) d'axe géométrique (38A) s'étendant au moins sensiblement parallèlement à l'axe géométrique (35A) de l'articulation cylindrique (35), liant le premier organe de guidage (33) au châssis (2). De ce fait, lors du travail, les organes de guidage (33, 34) ainsi décrits, positionnent le bras de soc (6) par rapport au châssis (2), suivant une direction transversale à la direction de travail (5).

Comme dit précédemment, les deux organes de guidage (33, 34) positionnent ou guident l'extrémité supérieure de la partie arrière (31) du bras de soc (6). Avantageusement, la partie arrière (31) du bras de soc (6) comporte, à cet effet, un profilé (39) de section rectangulaire, dont les arêtes sont au moins partiellement chanfreinées pour former les surfaces de positionnement (36', 37') destinées à venir en contact avec les surfaces de positionnement (36, 37) des organes de guidage (33, 34).

Le réglage de la profondeur de travail du soc (3) est réalisé en translatant le bras de soc (6) en hauteur au moyen d'un dispositif à vis et écrou (40) dont l'axe longitudinal (41A) de la vis (41) s'étend au moins sensiblement parallèlement à l'axe longitudinal de l'extrémité supérieure de la partie arrière (31) du bras de soc (6). De plus, cette vis (41) peut être vissée plus ou moins profondément dans un écrou (42) solidaire du bras de soc (6), tandis que sous l'effet du poids du soc (3) et de son bras (6), l'extrémité inférieure de la vis (41) s'appuie sur le châssis (2). De ce fait, l'utilisateur peut aisément translater le bras de soc (6) entre les deux organes de guidage (33, 34) par rotation de la vis (41) du dispositif à vis et écrou (40).

Sur la figure 4, il apparaît également qu'une fois la position choisie atteinte, le bras de soc (6) peut être immobilisé par rapport au châssis (2) au moyen d'un organe de maintien (43). A cet effet, les éléments de liaison (7) comportent en sus une chape (44) dont les ailes (45, 46) s'étendent au moins sensiblement parallèlement à un plan vertical dirigé suivant la direction de travail (5). Entre les ailes (45, 46) de cette chape (44) s'étend l'extrémité supérieure de la partie arrière (31) du bras de soc (6). Cette dernière comporte plusieurs trous circulaires (47) d'axe géométrique (47A) dirigé au moins sensiblement horizontalement et transversalement à la direction de travail (5). Ces trous (47) sont au moins sensiblement identiques entre eux et alignés de manière équidistante suivant l'axe longitudinal de l'extrémité supérieure du bras de soc (6). De part et d'autre du bras de soc (6), chaque aile (45, 46) de la chape (44) est pourvue d'au moins un trou respectif (48). Ces trous (48) sont circulaires coaxiaux et leur diamètre est au moins sensiblement identique au diamètre des trous (47) du bras de soc (6). De plus, en translatant le bras de soc (6) entre les ailes (45, 46) de la chape (44), chaque trou (47) du bras de soc (6) coïncide successivement avec les trous (48) de ladite chape (44). Dès qu'un trou (47) du bras de soc (6) coïncide avec une paire de trous (48) de la chape (44), l'utilisateur peut y placer l'organe de maintien (43) afin de verrouiller le bras de soc (6) dans la position choisie.

Dans l'exemple de réalisation selon l'invention, représenté sur les figures 1 à 4, l'organe de maintien (43) utilisé est une broche, cela permet de verrouiller et de déverrouiller aisément le bras de soc (6). Du reste, dans cette réalisation, les ailes (45, 46) de la chape (44) comportent plusieurs paires de trous (48) qui, selon un principe très intéressant, offrent un choix important de positions réglables. En effet, la distance (e) qui sépare les axes géométriques (48A) de deux paires de trous (48) adjacentes est proche, mais néanmoins différente de la distance (E) qui sépare les axes géométriques (47A) de deux trous (47) adjacents que comporte le bras de soc (6). Ainsi, dans la plupart des cas, il suffit de translater le bras de soc (6) d'une distance de |E-e| pour passer d'une position réglable dans une autre position réglable.

Sur la figure 3 de cet exemple de réalisation selon l'invention, il apparaît aussi que les éléments de liaison (7) comportent du reste deux butées (49, 50) contribuant à maintenir en position le bras de soc (6) lors du transport. A cet effet, la première butée (49) est agencée juste devant le bras de soc (6) et au moins sensiblement au niveau du premier organe de guidage (33), tandis que la deuxième butée (50) s'étend juste derrière le bras de soc (6) et au moins sensiblement au niveau du deuxième organe de guidage (34). De ce fait, ces butées (49, 50), qui contribuent à maintenir en position le bras de soc (6) au transport, participent également au guidage du bras de soc (6) lorsque celui-ci est déplacé en hauteur sous l'action du dispositif à vis et écrou (40).

Lors du montage, on soumet le bras de soc (6) à un effort (s'opposant à l'avancement du soc (3) dans le sol) qui est dirigé vers l'arrière et vers le bas, de sorte à plaquer au moins sensiblement simultanément le bras de soc (6) contre les deux organes de guidage (33, 34). Dès lors, le premier organe de guidage (33) pivote autour de l'axe géométrique (35A) de l'articulation cylindrique (35) qui le lie au châssis (2), jusqu'à ce que sa surface de positionnement (36) soit totalement en contact avec la surface de positionnement complémentaire (36') du bras de soc (6). Cela a pour effet de positionner au moins partiellement le bras de soc (6) par rapport au châssis (2), transversalement à la direction de travail (5). Le deuxième organe de guidage (34), quant à lui, pivote autour de l'axe géométrique (38A) de l'articulation cylindrique (38) qui le lie au châssis (2), afin d'achever le positionnement du bras de soc (6) au moyen des deux surfaces de positionnement supplémentaires (37, 37').

On peut encore constater, dans cet exemple de réalisation selon l'invention, que l'articulation cylindrique (35, 36) liant chaque organe de guidage (33, 34) au châssis (2) est réalisée au moyen d'un boulon (51, 52) correspondant. Chaque boulon (51, 52) traverse les deux ailes (45, 46) de la chape (44) entre lesquelles s'étendent les organes de guidage (33, 34). Comme visible sur la figure 4, l'épaisseur de chaque organe de guidage (33, 34) correspond au moins sensiblement à la distance séparant les deux ailes (45, 46) de la chape (44). De ce fait, il est avantageusement possible de maintenir une fois positionnés, les organes de guidage (33, 34) dans leur position optimale en serrant les boulons (51, 52), sans pour autant coincer le bras de soc (6) entre les ailes (45, 46) de la chape (44).

Finalement, différentes modifications restent possibles, notamment en ce qui concerne la constitution des divers éléments ou par substitution d'équivalents techniques, sans pour autant sortir du domaine de protection défini dans les revendications. C'est ainsi notamment que dans l'exemple décrit, il est parfaitement possible de réaliser le premier organe de guidage (33) ou/et le deuxième organe de guidage (34) au moyen de plusieurs éléments.

## Revendications

1. Machine agricole de travail du sol (1) comportant un châssis (2), au moins un soc (3) et un bras de soc (6) correspondant lié audit châssis (2) à l'aide d'éléments de liaison (7), lesdits éléments de liaison (7) comportant :
- des organes de guidage (33, 34) autorisant un déplacement en hauteur dudit bras de soc (6) par rapport au châssis (2),
- au moins un organe de maintien (43) maintenant le bras de soc (6) par rapport au châssis (2) dans la position choisie
et
- une chape (44) dont les ailes (45, 46) s'étendent au moins sensiblement parallèlement à un plan vertical dirigé suivant la direction de travail (5) et entre lesquelles le bras de soc (6) est maintenu au moyen de l'organe de maintien (43),
un premier organe de guidage (33) s'étendant derrière le bras de soc (6), compte tenu du sens d'avance (5) au travail, lequel premier organe de guidage (33) présente une surface de positionnement (36) destinée à collaborer avec une surface de positionnement complémentaire (36') prévue sur le bras de soc (6) et est lié au châssis (2) à l'aide d'une articulation cylindrique (35) d'axe (35A) au moins sensiblement perpendiculaire à la direction de travail (5), tandis qu'un deuxième organe de guidage (34) s'étend devant le bras de soc (6), compte tenu du sens d'avance (5) au travail et plus haut que ledit premier organe de guidage (33), lequel deuxième organe de guidage (34) présente une surface de positionnement (37) en forme de "V" ou équivalente destinée à collaborer avec une surface de positionnement complémentaire (37') prévue sur le bras de soc (6) et est lié au châssis (2) à l'aide d'une articulation cylindrique (38) d'axe (38A) au moins sensiblement perpendiculaire à la direction de travail (5),
caractérisée en ce que la surface de positionnement (36) du premier organe de guidage (33) est également en forme de "V" ou équivalente, de sorte qu'au travail lesdits organes de guidage (33, 34) positionnent ledit bras de soc (6) transversalement à la direction de travail (5), que l'organe de maintien (43) est une broche et que le bras de soc (6) comporte une pluralité de trous (47) d'axe (47A) dirigé transversalement à la direction de travail (5), lesquels trous (47) peuvent être amenés en face d'une paire de trous coaxiaux (48) de la chape (44) dans le but de recevoir ladite broche (43).

2. Machine agricole de travail du sol selon la revendication 1, caractérisée en ce que les surfaces de positionnement (36, 36' ; 37, 37') présentent une forme en "V" dont le plan de symétrie respectif (36A ; 37A) s'étend au moins sensiblement parallèlement à un plan vertical dirigé suivant la direction de travail (5).

3. Machine agricole de travail du sol selon la revendication 2, caractérisée en ce que le plan de symétrie (37A) de la surface de positionnement (37) du deuxième organe de guidage (34) est au moins sensiblement confondu avec le plan de symétrie (36A) de la surface de positionnement (36) du premier organe de guidage (33).

4. Machine agricole de travail du sol selon l'une au moins des revendications 1 à 3, caractérisée en ce que l'angle d'ouverture (α, β) de la forme en "V" desdites surfaces de positionnement (36, 36' ; 37, 37') est de l'ordre de 90°.

5. Machine agricole de travail du sol selon l'une au moins des revendications 1 à 4, caractérisée en ce que la surface de positionnement (36, 37) concave est prévue sur l'organe de guidage (33, 34).

6. Machine agricole de travail du sol selon l'une au moins des revendications 1 à 5, caractérisée en ce que les éléments de liaison (7) comportent en sus au moins une butée (49, 50) contribuant à maintenir le bras de soc (6) en position lors du transport et/ou à guider le bras de soc (6) lorsque celui-ci est déplacé en hauteur.

7. Machine agricole de travail du sol selon la revendication 6, caractérisée en ce qu'une première butée (49) est implantée juste devant le bras de soc (6) et de préférence au moins sensiblement au niveau du premier organe de guidage (33), et qu'une deuxième butée (50) s'étend juste derrière le bras de soc (6) et de préférence au moins sensiblement au niveau du deuxième organe de guidage (34).

8. Machine agricole de travail du sol selon l'une au moins des revendications 1 à 7, caractérisée en ce que les éléments de liaison (7) comportent en sus un dispositif à vis et écrou (40) au moyen duquel le bras de soc (6) peut être déplacé en hauteur.

9. Machine agricole de travail du sol selon la revendication 8, caractérisée en ce que l'axe (41A) de la vis (41) du dispositif à vis et écrou (40) s'étend au moins sensiblement parallèlement à l'axe longitudinal de l'extrémité supérieure du bras de soc (6), ladite vis (41) pouvant d'une part être vissée plus ou moins profondément dans un écrou (42) solidaire du bras de soc (6) et s'appuyant d'autre part à son extrémité libre sur le châssis (2).

10. Machine agricole de travail du sol selon l'une au moins des revendications 1 à 9, caractérisée en ce que le châssis (2) supporte en sus un rotor (4) muni d'outils de travail du sol (24).

11. Machine agricole de travail du sol selon la revendication 10, caractérisée en ce que le bras de soc (6) s'étend dans le cylindre (32) généré par les outils de travail du sol (24) durant la rotation du rotor (4).

## Claims

1. An agricultural machine (1) for working the soil comprising a frame (2), at least one chisel share (3) and a corresponding chisel share arm (6) connected to the said frame (2) by means of connecting elements (7), the said connecting elements (7) comprising:
- guide elements (33, 34) allowing a displacement in height of the said chisel share arm (6) in relation to the frame (2),
- at least one maintaining element (43) maintaining the chisel share arm (6) in relation to the frame (2) in the chosen position
and
- a channel-shaped support (44) whose wings (45, 46) extend at least approximately parallel to a vertical plane directed along the direction of work (5) and between which the chisel share arm (6) is maintained by means of the maintaining element (43),
a first guide element (33) extending behind the chisel share arm (6), taking account of the direction of advance (5) during work, this first guide element (33) having a positioning surface (36) intended to co-operate with a complementary positioning surface (36') provided on the chisel share arm (6) and being connected to the frame (2) by means of a cylindrical articulation (35) whose axis (35A) extends at least approximately perpendicular to the direction of work (5), while a second guide element (34) extends in front of the chisel share arm (6), taking account of the direction of advance (5) during work and higher than the said first guide element (33), the second guide element (34) having a positioning surface (37) in a V-shape or equivalent intended to co-operate with a complementary positioning surface (37') provided on the chisel share arm (6) and being connected to the frame (2) by means of a cylindrical articulation (38) whose axis (38A) extends at least approximately perpendicular to the direction of work (5),
***characterised in that*** the positioning surface (36) of the first guide element (33) is also in a V-shape or equivalent, in such a way that during work the said guide elements (33, 34) position the said chisel share arm (6) transversally to the direction of work (5), in that the maintaining element (43) is a spindle and in that the chisel share arm (6) has a plurality of holes (47) with axes (47A) directed transversely to the direction of work (5), these holes (47) being able to be brought opposite a pair of coaxial holes (48) of the channel-shaped support (44) with the aim of receiving the said spindle (43).

2. An agricultural machine for working the soil in accordance with claim 1, ***characterised in that*** the positioning surfaces (36, 36'; 37, 37') have a V-shape whose respective plane of symmetry (36A; 37A) extends at least approximately parallel to a vertical plane directed along the direction of work (5).

3. An agricultural machine for working the soil in accordance with claim 2, ***characterised in that*** the plane of symmetry (37A) of the positioning surface (37) of the second guide element (34) is at least approximately coincident with the plane of symmetry (36A) of the positioning surface (36) of the first guide element (33).

4. An agricultural machine for working the soil in accordance with one at least of claims 1 to 3, ***characterised in that*** the angle of opening (α, β) of the V-shape of the said positioning surfaces (36, 36'; 37, 37') is in the order of 90⁰.

5. An agricultural machine for working the soil in accordance with one at least of claims 1 to 4, ***characterised in that*** the concave positioning surface (36, 37) is provided on the guide element (33, 34).

6. An agricultural machine for working the soil in accordance with one at least of claims 1 to 5, ***characterised in that*** the connecting elements (7) have in addition at least one stop (49, 50) contributing to maintain the chisel share arm (6) in position during transport and/or to guide the chisel share arm (6) when this latter is displaced in height.

7. An agricultural machine for working the soil in accordance with claim 6, ***characterised in that*** a first stop (49) is arranged just in front of the chisel share arm (6) and preferably at least approximately at the level of the first guide element (33), and in that a second stop (50) extends just behind the chisel share arm (6) and preferably at least approximately at the level of the second guide element (34).

8. An agricultural machine for working the soil in accordance with one at least of claims 1 to 7, ***characterised in that*** the connecting elements (7) have in addition a screw and nut device (40) by means of which the chisel share arm (6) may be displaced in height.

9. An agricultural machine for working the soil in accordance with claim 8, ***characterised in that*** the axis (41A) of the screw (41) of the screw and nut device (40) extends at least approximately parallel to the longitudinal axis of the upper end of the chisel share arm (6), the said screw (41) on the one hand being able to the screwed more or less deeply into a nut (42) solidly attached to the chisel share arm (6) and on the other hand resting at its free end on the frame (2).

10. An agricultural machine for working the soil in accordance with one at least of claims 1 to 9, ***characterised in that*** the frame (2) supports in addition a rotor (4) equipped with tools (24) for working the soil.

11. An agricultural machine for working the soil in accordance with claim 10, ***characterised in that*** the chisel share arm (6) extends in the cylinder (32) generated by the tools (24) for working the soil during the rotation of the rotor (4).

## Patentansprüche

1. Landwirtschaftliche Bodenbearbeitungsmaschine (1), die einen Rahmen (2), mindestens eine Schar (3) und einen entsprechenden Schararm (6) aufweist, der mit dem Rahmen (2) mittels Verbindungselementen (7) verbunden ist, welche Verbindungselemente (7) :
- Führungsorgane (33, 34), die eine Höhenverstellung des Schararms (6) in bezug auf den Rahmen (2) zulassen,
- mindestens ein Halteorgan (43), das den Schararm (6) in bezug auf den Rahmen (2) in der gewählten Stellung hält
und
- einen Bügel (44), dessen Schenkel (45, 46) sich zumindest im wesentlichen parallel zu einer in Arbeitsrichtung (5) weisenden Vertikalebene erstrecken und zwischen welchen der Schararm (6) mittels des Halteorgans (43) gehalten ist,
umfassen :
wobei sich ein erstes Führungsorgan (33), in Bezugnahme auf die Arbeitsvorschubrichtung (5), hinter dem Schararm (6) erstreckt, welches erste Führungsorgan (33) eine Positionierungsfläche (36) aufweist, die dazu bestimmt ist, mit einer komplementären, auf dem Schararm (6) vorgesehenen Positionierungsfläche (36') zusammenzuarbeiten, und mit dem Rahmen (2) mittels eines zylindrischen Gelenks (35) mit zumindest im wesentlichen zur Arbeitsvorschubrichtung (5) senkrechter Achse (35A) verbunden ist, wogegen sich ein zweites Führungsorgan (34), in Bezugnahme auf die Arbeitsvorschubrichtung (5), vor dem Schararm (6) und höher als das erste Führungsorgan (33) erstreckt, welches zweite Führungsorgan (34) eine Positionierungsfläche (37) in Form eines "V" oder dgl. aufweist, die dazu bestimmt ist, mit einer komplementären, auf dem Schararm (6) vorgesehenen Positionierungsfläche (37') zusammenzuarbeiten, und mit dem Rahmen (2) mittels eines zylindrischen Gelenks (38) mit zumindest im wesentlichen zur Arbeitsvorschubrichtung (5) senkrechter Achse (38A) verbunden ist,
***dadurch gekennzeichnet***, daß die Positionierungsfläche (36) des ersten Führungsorgans (33) ebenfalls in Form eines "V" oder dgl. ist, so daß während der Arbeit die Führungsorgane (33, 34) den Schararm (6) quer zur Arbeitsvorschubrichtung (5) positionieren, daß das Halteorgan (43) ein Bolzen ist, und daß der Schararm (6) eine Vielzahl von Löchern (47) aufweist, deren Achse (47A) quer zur Arbeitsvorschubrichtung (5) ausgerichtet ist, welche Löcher (47) gegenüber einem Paar koaxialer Löcher (48) des Bügels (44) zwecks Aufnahme des Bolzens (43) angeordnet sein können.

2. Landwirtschaftliche Bodenbearbeitungsmaschine nach Anspruch 1, ***dadurch gekennzeichnet***, daß die Positionierungsflächen (36, 36' ; 37, 37') eine "V" - Form aufweisen, deren entsprechende Symmetrieebene (36A ; 37A) sich zumindest im wesentlichen parallel zu einer in Arbeitsrichtung (5) weisenden Vertikalebene erstreckt.

3. Landwirtschaftliche Bodenbearbeitungsmaschine nach Anspruch 2, ***dadurch gekennzeichnet***, daß die Symmetrieebene (37A) der Positionierungsfläche (37) des zweiten Führungsorgans (34) zumindest im wesentlichen mit der Symmetrieebene (36A) der Positionierungsfläche (36) des ersten Führungsorgans (33) zusammenfällt.

4. Landwirtschaftliche Bodenbearbeitungsmachine nach mindestens einem der Ansprüche 1 bis 3, ***dadurch gekennzeichnet***, daß der Öffnungswinkel (a, β) der "V" - Form der Positionierungsflächen (36, 36' ; 37, 37') in Bereich von 90° ist.

5. Landwirtschaftliche Bodenbearbeitungsmaschine nach mindestens einem der Ansprüche 1 bis 4, ***dadurch gekennzeichnet***, daß die konkave Positionierungsfläche (36, 37) auf dem Führungsorgan (33, 34) vorgesehen ist.

6. Landwirtschaftliche Bodenbearbeitungsmaschine nach mindestens einem der Ansprüche 1 bis 5, ***dadurch gekennzeichnet***, daß die Verbindungselemente (7) noch mindestens einen Anschlag (49, 50) aufweisen, die dazu beitragen, den Schararm (6) in seiner Stellung während des Transports zu halten und/oder den Schararm (6) zu führen, wenn dieser nach oben verstellt wird.

7. Landwirtschaftliche Bodenbearbeitungsmachine nach Anspruch 6, ***dadurch gekennzeichnet***, daß ein erster Anschlag (49) knapp vor dem Schararm (6) und vorzugsweise zumindest im wesentlichen in Höhe des ersten Führungsorgans (33) angeordnet ist, und daß ein zweiter Anschlag (50) sich knapp hinter dem Schararm (6) und vorzugsweise zumindest im wesentlichen in Höhe des zweiten Führungsorgans (34) erstreckt.

8. Landwirtschaftliche Bodenbearbeitungsmaschine nach mindestens einem der Ansprüche 1 bis 7, ***dadurch gekennzeichnet***, daß die Verbindungselemente (7) noch eine Vorrichtung mit Schraube und Mutter (40) aufweisen, mittels welcher der Schararm (6) höhenverstellt werden kann.

9. Landwirtschaftliche Bodenbearbeitungsmaschine nach Anspruch 8, dadurch gekennzeichnet, , daß die Achse (41A) der Schraube (41) der Vorrichtung mit Schraube und Mutter (40) sich zumindest im wesentlichen parallel zur Längsachse des oberen Endes des Schararms (6) erstreckt, welche Schraube (41) einerseits mehr oder weniger tief in die mit dem Schararm (6) fest verbundene Mutter (42) geschraubt werden kann und sich anderseits an ihrem freien Ende auf dem Rahmen (2) abstützt.

10. Landwirtschaftliche Bodenbearbeitungsmachine nach mindestens einem der Ansprüche 1 bis 9, ***dadurch gekennzeichnet***, daß der Rahmen (2) noch einen Rotor (4) trägt, der mit Bodenbearbeitungswerkzeugen (24) versehen ist.

11. Landwirtschaftliche Bodenbearbeitungsmaschine nach Anpruch 10, ***dadurch gekennzeichnet***, daß der Schararm (6) sich im Zylinder (32) erstreckt, der durch die Bodenbearbeitungswerkzeuge (24) während der Drehung des Rotors (4) erzeugt wird.
